# EUROPEAN PATENT APPLICATION

(11) **EP 4 418 135 A1**
(43) Date of publication of application: **21.08.2024**
(21) Application number: 22891419.8
(22) Date of filing: 30.05.2022
(51) Int. Cl.: G06F 15/173

(54) **DATA PROCESSING METHOD AND RELATED DEVICE**

(30) Priority: 09.11.2021 CN 202111320330
(71) Applicant: Huawei Technologies Co., Ltd., Shenzhen, Guangdong 518129 (CN)
(72) Inventor: ZHANG, Wei, Shenzhen, Guangdong 518129 (CN); ZHOU, Minjun, Shenzhen, Guangdong 518129 (CN); ZHOU, Hui, Shenzhen, Guangdong 518129 (CN)
(74) Representative: Isarpatent
(86) International application number: PCT/CN2022/095908
(87) International publication number: WO 2023/082609

(57) **Abstract**

Embodiments of this application disclose a data processing method and a related device. The method is applied to the communication field, particularly to a scenario in which a remote processor needs to be invoked to execute a task. The method is executed by a computing device. The computing device includes a network interface card, a processor, and a processor scheduling engine. The network interface card obtains first execution information of to-be-processed data from a received data processing request, and converts the first execution information into second execution information. The network interface card sends the second execution information to the processor scheduling engine. The processor scheduling engine invokes the processor for processing, so that there is no need to send the data processing request to an internal memory and use an operating system to invoke the processor for processing, thereby improving processing efficiency.

## Description

This application claims priority to Chinese Patent Application No. 202111320330.5, filed with the China National Intellectual Property Administration on November 9, 2021 and entitled "DATA PROCESSING METHOD AND RELATED DEVICE", which is incorporated herein by reference in its entirety.

### TECHNICAL FIELD

This application relates to the communication field, and in particular, to a data processing method and a related device.

### BACKGROUND

A remote direct memory access (remote direct memory access, RDMA) technology is a communication technology for directly accessing an internal memory at a remote end. To be specific, data can be directly and quickly migrated from a client to the internal memory at the remote end, without intervention of operating systems (operating systems, OSs) of the client and the remote end.

Based on an existing RDMA technology, when a source device needs to indicate a remote device to process a task, the source device first sends a task processing request to the remote device through an RDMA send command. After receiving the task processing request, an RDMA network interface card (RDMA network interface card, RNIC) of the remote device first stores the task processing request into an internal memory of the remote device. Then, an operating system of the remote device parses the task processing request and invokes a central processing unit (central processing unit, CPU) of the remote device to execute the task processing request. However, efficiency of scheduling the CPU by the operating system is low, reducing efficiency of task processing.

### SUMMARY

Embodiments of this application provide a data processing method and a related device, to improve task execution efficiency when a remote end needs to invoke a processor to execute a task.

A first aspect of embodiments of this application provides a data processing method.

The method in embodiments of this application is executed by a computing device. The computing device includes a network interface card, a processor, and a processor scheduling engine. The network interface card of the computing device receives a data processing request, where the data processing request includes first execution information of to-be-processed data. The network interface card directly obtains the first execution information in the data processing request. After obtaining the first execution information, the network interface card converts the first execution information into second execution information, where the second execution information includes the first execution information. The network interface card sends the second execution information to the processor scheduling engine. The processor scheduling engine invokes the processor. After obtaining the second execution information, the processor processes the to-be-processed data based on the second execution information.

After receiving the data processing request, the network interface card directly parses the data processing request to obtain the first execution information in the data processing request, converts the first execution information into the second execution information, and sends the second execution information to the processor scheduling engine. The processor scheduling engine directly invokes the processor to process the to-be-processed data. This does not require sending the data processing request to an internal memory of the computing device and then using an OS to invoke the processor to parse the data processing request, thereby avoiding the use of the OS to invoke the processor and improving execution efficiency.

Based on the first aspect, in an optional implementation,
the data processing request includes the first execution information of the to-be-processed data, the to-be-processed data is to-be-executed code, and the first execution information includes a first storage address of the code. After obtaining the first execution information, the network interface card converts the first execution information into the second execution information, and sends the second execution information to the processor scheduling engine. The processor scheduling engine invokes the processor to process the second execution information. The processor obtains the code from the computing device based on the first storage address in the second execution information, and executes the code.

The network interface card directly obtains the first execution information in the data processing request, where the first execution information includes the address of the to-be-processed code in the computing device, and converts the first storage address in the data processing request into the second execution information. In this way, after being invoked, the processor directly executes the corresponding code based on the first storage address in the second information. This does not require sending the data processing request to the internal memory of the computing device and then using the OS to invoke the processor to obtain the data processing request, thereby saving time for obtaining the data processing request and improving efficiency of processing the to-be-processed data.

Based on the first aspect, in an optional implementation,
the computing device further includes an internal memory. The data processing request includes the first execution information, the to-be-processed data is to-be-executed code, and the first execution information includes a first storage address of the code and a context required for executing the code. The network interface card parses the data processing request to obtain the context in the first execution information. The network interface card stores the context into the internal memory, and obtains a second storage address of the context in the internal memory. The network interface card may specifically store the context into the internal memory through direct memory access (direct memory access, DMA). This does not require the operating system to invoke the processor to parse the data processing request and obtain the context from the data processing request, and does not require the operating system to invoke the processor to replicate the context into the internal memory, thereby improving efficiency of processing the to-be-processed data. The network interface card converts the first storage address and the second storage address into the second execution information. The processor scheduling engine invokes the processor for processing. The processor obtains the first storage address and the second storage address from the second execution information, obtains the code based on the first storage address, obtains the context based on the second storage address, and executes the code based on the context.

When the context is required for executing the code, the network interface card can encapsulate the storage address of the context into the second execution information. This does not require the processor to parse the data processing request and obtain the second execution information from the data processing request, thereby improving processing efficiency.

Based on the first aspect, in an optional implementation,
the data processing request is carried in an execution command in an RDMA protocol, the data processing request includes a BTH (basic transmission header, BTH) and an extension header, the BTH includes the execution command, and the extension header includes the first execution information. The execution command is used for indicating the network interface card to process the data processing request.

Because the data processing request includes the execution command, it is not necessary to transmit the data processing request to the internal memory and then use the operating system to invoke the processor to parse the data processing request. This avoids repeatedly copying the data processing request and wasting resources of the internal memory. In addition, because this does not require the processor to parse the data processing request, efficiency is improved.

Based on the first aspect, in an optional implementation,
the execution command is a command defined in a custom field of a transport layer in the RDMA protocol. The execution command is used for indicating the network interface card to directly parse the data processing request.

The execution command is written into the custom field of the transport layer in the RDMA protocol, so that the data processing request to be transmitted includes the execution command. Therefore, after receiving the data processing request including the execution command, the network interface card directly parses the data processing request. This does not require the processor to parse the data processing request, thereby improving efficiency.

Based on the first aspect, in an optional implementation,
the processor scheduling engine is a packet order enforcer.

With the use of the processor scheduling engine to schedule the processor, the use of the OS to invoke the processor is avoided, thereby improving processing efficiency.

Based on the first aspect, in an optional implementation, for a relationship among the network interface card, the processor, and the processor scheduling engine, refer to any one of the following.
1. The computing device includes a host connected to the network interface card, and the host includes the processor and the processor scheduling engine. When obtaining the data processing request, the network interface card directly obtains the first execution information in the data processing request. After obtaining the first execution information, the network interface card converts the first execution information into the second execution information. The network interface card sends the second execution information to the processor scheduling engine in the host. The processor scheduling engine invokes the processor to process the second execution information. The processor processes the to-be-processed data based on the second execution information.
   After receiving the data processing request, the network interface card directly parses the data processing request to obtain the first execution information in the data processing request, converts the first execution information into the second execution information, and sends the second execution information to the processor scheduling engine in the network interface card. The processor scheduling engine directly invokes the processor in the network interface card to execute the to-be-processed data. This does not require transferring the data processing request to the internal memory and then using the OS to invoke the processor, thereby improving execution efficiency.
2. The computing device is a data processing unit, including the network interface card, the processor, and the processor scheduling engine. The to-be-processed data is stored in another computing device. When obtaining the data processing request, the network interface card directly obtains the first execution information in the data processing request. After obtaining the first execution information, the network interface card converts the first execution information into the second execution information. The network interface card sends the second execution information to the processor scheduling engine. The processor scheduling engine invokes the processor in the computing unit to process the second execution information. The processor processes the to-be-processed data in the another computing device based on the second execution information.

A second aspect of embodiments of this application provides a network interface card.

The network interface card includes a first processor and a storage device. The storage device stores program instructions. The first processor runs the program instructions to execute: receiving a data processing request, where the data processing request includes first execution information of to-be-processed data; obtaining the first execution information from the data processing request; and converting the first execution information into second execution information, and sending the second execution information to a processor scheduling engine, where the second execution information is used for indicating the processor scheduling engine to schedule a second processor, so that the second processor processes the to-be-processed data based on the second execution information.

The network interface card directly obtains the first execution information in the data processing request, where the first execution information includes an address of to-be-processed code in a computing device, and converts the first storage address in the data processing request into the second execution information. In this way, after being invoked, the processor directly executes the corresponding code based on the first storage address in the second information. This does not require sending the data processing request to an internal memory of the computing device and then using an OS to invoke the processor to obtain the data processing request, thereby saving time for obtaining the data processing request and improving efficiency of processing the to-be-processed data.

Based on the second aspect, in a possible implementation,
the data processing request is carried in an execution command in a remote direct memory access RDMA protocol, and the execution command is used for indicating the network interface card to process the data processing request.

Based on the second aspect, in a possible implementation,
the execution command is a command defined in a custom field of a transport layer in the RDMA protocol.

A third aspect of embodiments of this application provides a computing device.

The computing device includes the network interface card according to the second aspect, a second processor, and a processor scheduling engine. The network interface card is configured to receive a data processing request, where the data processing request includes first execution information of to-be-processed data. The network interface card is further configured to obtain the first execution information from the data processing request. The network interface card is further configured to convert the first execution information into second execution information, where the second execution information includes the first execution information. The network interface card is further configured to send the second execution information to the processor scheduling engine. The processor scheduling engine is configured to invoke the second processor to process the second execution information. The second processor is configured to process the to-be-processed data based on the second execution information.

Based on the third aspect, in an optional implementation, the to-be-processed data is to-be-executed code, and the first execution information includes a first storage address of the code. The second processor is specifically configured to obtain the code based on the first storage address in the second execution information, and execute the code.

Based on the third aspect, in an optional implementation, the computing device further includes an internal memory. The data processing request includes the first execution information, the to-be-processed data is to-be-executed code, and the first execution information includes a first storage address of the code and a context required for executing the code. The network interface card parses the data processing request to obtain the context in the first execution information. The network interface card stores the context into the internal memory, and obtains a second storage address of the context in the internal memory. The network interface card may specifically store the context into the internal memory through DMA. This does not require an operating system to invoke the second processor to parse the data processing request and obtain the context from the data processing request, and does not require the operating system to invoke the second processor to replicate the context into the internal memory, thereby improving efficiency of processing the to-be-processed data. The network interface card converts the first storage address and the second storage address into the second execution information. The processor scheduling engine invokes the second processor for processing. The second processor obtains the first storage address and the second storage address from the second execution information, obtains the code based on the first storage address, obtains the context based on the second storage address, and executes the code based on the context.

When the context is required for executing the code, the network interface card can encapsulate the storage address of the context into the second execution information. This does not require the processor to parse the data processing request and obtain the second execution information from the data processing request, thereby improving processing efficiency.

Based on the third aspect, in an optional implementation, the data processing request is carried in an execution command in a remote direct memory access RDMA protocol.

Based on the third aspect, in an optional implementation, the executed command is a command defined in a custom field of a transport layer in the RDMA protocol.

Based on the third aspect, in an optional implementation, the processor scheduling engine is a packet order enforcer.

Based on the third aspect, in an optional implementation, the computing device includes a host connected to the network interface card, and the host includes the second processor and the processor scheduling engine.

Based on the third aspect, in an optional implementation, the processor is a data processor DPU, the computing device is connected to another computing device, and the to-be-processed data is stored in the another computing device.

### BRIEF DESCRIPTION OF DRAWINGS

To describe technical solutions in embodiments of this application or conventional technologies more clearly, the following briefly introduces the accompanying drawings required for describing the embodiments or conventional technologies. Apparently, the accompanying drawings in the following description merely show embodiments of this application, and a person of ordinary skill in the art may still derive other drawings from these accompanying drawings without creative efforts.
FIG. 1 is a schematic structural diagram of an embodiment of a data processing system according to this application;
FIG. 2 is a schematic diagram of a command defined in an RDMA protocol according to an embodiment of this application;
FIG. 3 is a schematic structural diagram of an embodiment of a second computing device in FIG. 1;
FIG. 4 is a schematic structural diagram of an embodiment of a network interface card according to this application;
FIG. 5 is a schematic flowchart of a first embodiment of a data processing method according to this application;
FIG. 6 is a schematic diagram of a format of a data processing request according to this application;
FIG. 7 is a schematic diagram of another format of a data processing request according to this application;
FIG. 8 is a schematic diagram of an embodiment of processing data by a second computing device according to this application;
FIG. 9 is a schematic structural diagram of another embodiment of a data processing system according to this application;
FIG. 10 is a schematic structural diagram of an embodiment of a second computing device in FIG. 9;
FIG. 11 is a schematic flowchart of a second embodiment of a data processing method according to this application; and
FIG. 12 is a schematic diagram of another embodiment of processing data by a second computing device according to this application.

### DESCRIPTION OF EMBODIMENTS

The following describes embodiments of the present invention with reference to the accompanying drawings in embodiments of the present invention. Terms used in the description of embodiments of the present invention are merely used to explain specific embodiments of the present invention, but are not intended to limit the present invention. A person of ordinary skill in the art may learn that, as technologies develop and new scenarios emerge, technical solutions provided in embodiments of this application are also applicable to similar technical problems.

In the specification, claims, and accompanying drawings of the present invention, the terms "first", "second", "third", "fourth", and the like (if any) are intended to distinguish between similar objects, but do not necessarily indicate a particular order or sequence. It should be understood that data termed in such a way are interchangeable in proper cases, so that embodiments of the present invention described herein can be implemented in other orders than the order illustrated or described herein. In addition, the terms "include" and "have" and any other variants thereof are intended to cover a non-exclusive inclusion. For example, a process, method, system, product, or device that includes a list of steps or units is not limited to those expressly listed steps or units, but may include other steps or units not expressly listed or inherent to such a process, method, product, or device.

An RDMA technology is a technology that allows directly transferring data to a storage area of a remote computing device, so that data can be quickly moved from a storage area of one computing device to a storage area of another computing device. In addition, in a process of accessing the storage area of the remote computing device, invoking of a processor may not be required, thereby improving efficiency of data access to the remote computing device.

In some other application scenarios, the RDMA technology is not only used for accessing a storage area of a remote computing device, but may also be used for scheduling a computing power of the remote computing device. Specifically, a scheduling device (source device) that initiates a scheduling request sends a request message to a scheduled remote computing device, where the request message carries information about a specific task such as function compute or information processing. The remote computing device executes a corresponding task based on the request message, and returns a task execution result to the source device. The remote computing device needs to use an operating system to schedule a processor to obtain the request message by performing an operation such as polling or an interrupt. In addition, in a process of executing the task, the operating system needs to schedule the processor to perform parsing, copying, and other operations on the request message. These operations increase a latency of processing the task, cause the processor to operate in a high-load state, and increase power consumption of the processor.

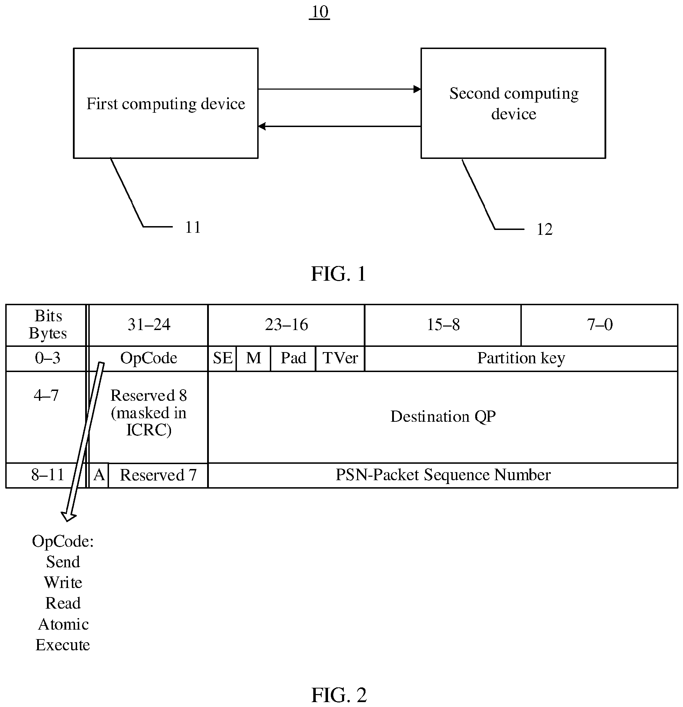

To resolve a problem of low efficiency of using an operating system to invoke a processor in a transmission scenario based on the RDMA technology, especially in a scenario where a remote end needs to execute a task, this application provides the following embodiments. As shown in FIG. 1, FIG. 1 is a schematic structural diagram of an embodiment of a data processing system according to this application. A system 10 includes a first computing device 11 and a second computing device 12. The first computing device 11 in FIG. 1 serves as a source device, and is configured to send a data processing request. The data processing request is used for indicating the second computing device 12 to process to-be-processed data, and the to-be-processed data is, for example, a computing task. The second computing device 12 is a remote device and stores to-be-processed data, for example, a computing task. The computing task may be, for example, a segment of program code, for example, a function. The second computing device 12 is further configured to execute a task indicated in the data processing request. The second computing device 12 may be a device such as a server, a computer, or a tablet. For ease of description, the following uses an example in which the to-be-processed data is a computing task for description.

The first computing device 11 communicates with the second computing device 12 via an RDMA protocol. In embodiments of this application, in addition to basic operation commands executed by the RDMA protocol, a new command, that is, an execute (Execute) command, is additionally provided in this application. This command is defined in a custom field of a transport layer in the RDMA protocol. Refer to FIG. 2. FIG. 2 is a schematic diagram of a command defined in an RDMA protocol according to an embodiment of this application. Commands currently defined in the RDMA protocol include a send (Send) command, a write (Write) command, a read (Read) command, and an atomic (Atomic) command. In embodiments of this application, a new command, that is, an execute (Execute) command, is defined in an OPCode field. The execution command is used for indicating a network interface card in the second computing device 12 to directly parse, after receiving the execution command, data such as a data processing request carried in the execution command, without transmitting the carried data to an internal memory of the second computing device. It should be noted that "execution command" is merely a general term for commands that indicate a network interface card to directly parse a data processing request, and does not refer to one or some particular commands. In actual applications, commands that indicate a network interface card to directly parse a data processing request may not be referred to as "execution command", and may be denoted by another name. This is not specifically limited herein. In embodiments of this application, "execution command" is merely used as an example for description.

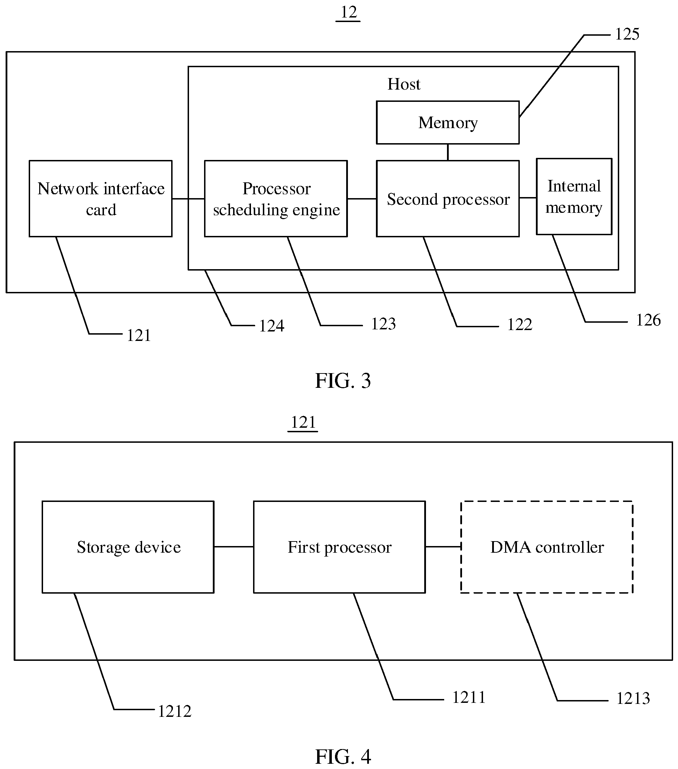

Specifically, as shown in FIG. 3 and FIG. 4, FIG. 3 is a schematic structural diagram of an embodiment of a computing device according to this application, and FIG. 4 is a schematic structural diagram of an embodiment of a network interface card according to this application. In this embodiment, the second computing device 12 includes a network interface card 121 in FIG. 4, a second processor 122, and a processor scheduling engine 123. The network interface card 121 is connected to the processor scheduling engine 123, and the processor scheduling engine 123 is connected to the second processor 122. The second computing device 12 may include a host 124 connected to the network interface card 121, and the second processor 122 and the processor scheduling engine 123 are disposed in the host 124. The second processor 122 may be a central processing unit (central processing unit, CPU) or a graphics processing unit (graphics processing unit, GPU). This is not specifically limited herein. The processor scheduling engine 123 may be a packet order enforcer (packet order enforcer, POE). The network interface card 121 includes a first processor 1211 and a storage device 1212.

The network interface card 121 is configured to receive a data processing request from the first computing device 11, and parse the data processing request. Specifically, the storage device 1212 stores program instructions. In response to an execution command, the first processor 1211 runs the program instructions to perform the following operations: receiving and parsing a data processing request; after parsing the data processing request to obtain information of a computing task, converting the information of the computing task into scheduling information, where the scheduling information may be used for scheduling the second processor 122; and then sending the scheduling information to the processor scheduling engine 123. The processor scheduling engine 123 may directly schedule, based on the scheduling information, the second processor 122 to process the computing task indicated in the scheduling information. Therefore, when executing the computing task, the second computing device 12 does not need to use an operating system to schedule the second processor 122 to execute the computing task, thereby improving task execution efficiency. In the following embodiments, for ease of description, the information of the computing task is referred to as first execution information, and the scheduling information is referred to as second execution information.

The second computing device may further include a memory 125, and the memory 125 is connected to the second processor 122. The memory 125 is configured to store the computing task, so that the second processor 122 obtains the computing task from the memory 125 based on an indication of the second execution information and processes the computing task. The memory 125 may be a non-volatile memory such as a read-only memory (read-only memory, ROM), a flash memory (flash memory), or a disk.

Optionally, the network interface card 121 further includes a direct memory access (direct memory access, DMA) controller 1213, and the DMA controller 1213 is connected to the first processor 1211. The second computing device 12 further includes an internal memory 126, and the internal memory 126 is connected to the DMA controller 1213 and the second processor 122. The internal memory 126 is a random access memory (random access memory, RAM). When the network interface card 121 obtains, through parsing, that the first execution information further includes status information required for executing the computing task, for example, a context, the DMA controller 1213 is used to transfer the status information DMA to the internal memory 126, so that the second processor 122 can directly obtain the status information from the internal memory 126, to process the computing task. For ease of description, the following uses an example in which the status information is a context for description.

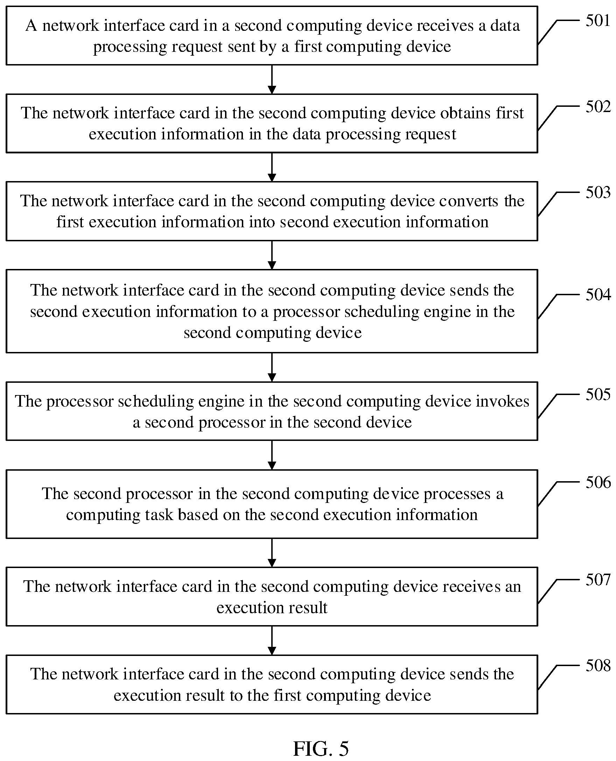

Based on the second computing device 12, this application provides the following embodiment of a data processing method. As shown in FIG. 5, FIG. 5 is a schematic flowchart of a first embodiment of a data processing method according to this application. This embodiment includes the following steps.

501. A network interface card in a second computing device receives a data processing request sent by a first computing device.

In an embodiment of this application, the first computing device sends the data processing request to the second computing device, and the network interface card in the second computing device receives the data processing request. The data processing request includes first execution information of a computing task. The computing task is to-be-executed code. The to-be-executed code is, for example, algorithm code or function code.

The first execution information includes a first storage address of the code in the second computing device. Before sending the data processing request to the second computing device, the first computing device needs to obtain the first execution information.

To improve task execution efficiency, the computing task may be pre-stored in a memory of the second device, and the first computing device stores a mapping relationship between the computing task and the first storage address. When requiring the second computing device to execute a task such as function compute based on the computing task, the first computing device obtains the first storage address based on the mapping relationship, and encapsulates the first storage address into the data processing request.

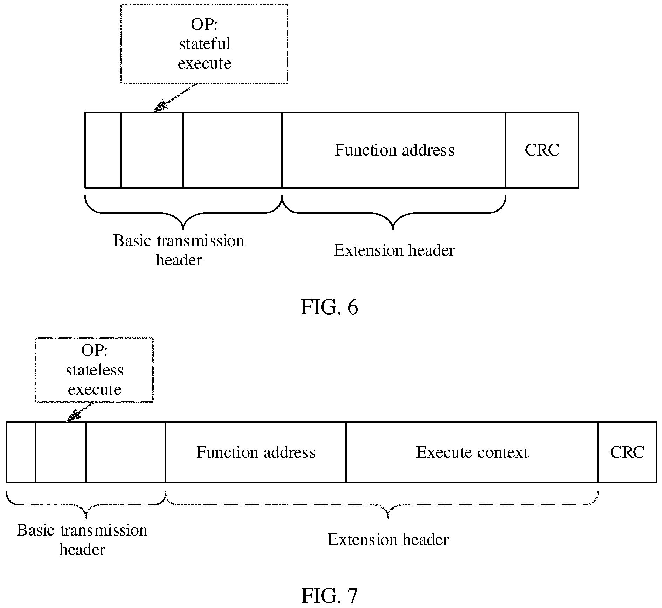

As shown in FIG. 6, FIG. 6 is a schematic diagram of a format of a data processing request according to this application. The data processing request includes a basic transmission header (basic transmission header, BTH) and an extension header. An operation code (opcode, OP) in the BTH includes an execution command, and the extension header includes first execution information. Such a data processing request carrying a context is a stateless execute request. To be specific, a processor may directly run a computing task and output a result, and no additional input data is required.

As shown in FIG. 7, FIG. 7 is a schematic diagram of another format of a data processing request according to this application. The data processing request includes a BTH and an extension header. An OP in the BTH includes an execution command, and the extension header includes first execution information. Different from the format of the data processing request in FIG. 5, the first execution information carried in the extension header in the format of the data processing request in FIG. 6 further includes a context. The context is, for example, data required in a process of running a computing task, for example, a parameter, an initial value, or a value range. Such a data processing request carrying the context is a stateful execute request. To be specific, the context needs to be provided for the computing task, so that the computing task can be processed by a processor.

In FIG. 6 and FIG. 7, a cyclic redundancy check (cyclic redundancy check, CRC) is a hash function that generates a short verification code of a fixed length based on data such as a network data packet or a computer file, is used for detecting or checking a possible error during data transmission or after data is saved, and uses a principle of division and remainder for error detection.

502. The network interface card in the second computing device obtains the first execution information in the data processing request.

Specifically, after receiving the data processing request, the network interface card in the second computing device parses the data processing request, to obtain an execution command from the transmission header of the data processing request. When the execution command obtained by the network interface card from the transmission header of the data processing request is Execute, the network interface card further obtains the first execution information from the extension header of the data processing request, and performs step 503.

In other words, parsing of the data processing request is implemented by the network interface card, and it is not necessary to directly store the data processing request into an internal memory and use an operating system to schedule a processor to parse the data processing request in the internal memory. Therefore, this does not require participation of the operating system and the processor, and avoids an operation of writing the data processing request into the internal memory, thereby improving parsing efficiency and reducing power consumption of the processor.

503. The network interface card in the second computing device converts the first execution information into second execution information.

The network interface card in the second computing device encapsulates the first execution information obtained by parsing into the second execution information. The second execution information is a descriptor, so that a processor scheduling engine can identify the second execution message and perform a subsequent operation of scheduling the processor.

When the data processing request is a stateless execute request, the first execution message includes the first storage address. The network interface card encapsulates the first storage address as a descriptor, to obtain the second execution information.

When the data processing request is a stateful execute request, the first execution message includes the first storage address and the context. The network interface card encapsulates the first storage address and a second storage address as a descriptor, to obtain the second execution information.

When the first execution information includes the context, the network interface card obtains the context through parsing, stores the context into the internal memory of the second computing device, and obtains the second storage address of the context in the internal memory. For example, the network interface card writes the context into the internal memory of the second computing device through DMA. Specifically, a DMA controller in the network interface card requests a second processor for DMA transfer of the context, the second processor allows DMA transfer and configure, for the DMA controller, a main memory start address into which the context is to be written, and the DMA controller writes the context into the internal memory based on the main memory start address. The second storage address of the context in the internal memory starts from the main memory start address and ends at the main memory start address plus a length of the context. In other words, the second storage address is determined based on the main memory start address configured by the second processor and the length of the context. Therefore, the second processor may directly obtain the context from the internal memory. This does not require the operating system to invoke the second processor to obtain the context from the data processing request and replicate the context into the internal memory, thereby reducing power consumption of the processor and improving efficiency of processing the computing task by the processor.

In some others implementation, to prevent the data processing request from being hijacked during transmission to cause leakage of the first storage address and malicious attacks to the second computing device, and to improve security during transmission, the first storage address in the first execution information may be a function address (function address, FA). After parsing the first storage address in the function address form, the network interface card in the second computing device obtains an address table (address table, AT), where the address table includes a mapping relationship between the function address and an actual physical address storing the code. The network interface card in the second computing device searches, according to the address table, for the actual physical address corresponding to the first storage address in the function address form. In this case, the first storage address in the second execution message is the actual physical address. The use of the function address to replace the address of code prevents leakage of the address of the code during transmission and improves security during transmission.

504. The network interface card in the second computing device sends the second execution information to the processor scheduling engine in the second computing device.

After obtaining the second execution information, the network interface card in the second computing device sends the second execution information to the processor scheduling engine in the second computing device, to indicate the processor scheduling engine to schedule the second processor.

505. The processor scheduling engine in the second computing device invokes the second processor in the second device.

The processor scheduling engine is hardware that can directly invoke a processor. After obtaining the second execution information, the processor scheduling engine in the second computing device invokes the idle second processor. In the embodiment of this application, the network interface card generates the second execution information for invoking a processor, and sends the second execution information to the processor scheduling engine. The processor scheduling engine schedules the second processor to execute the computing task. This does not require the operating system to schedule the second processor, thereby improving execution efficiency.

506. The second processor in the second computing device processes the computing task based on the second execution information.

In an embodiment of this application, when the second execution information includes the first storage address, the second processor obtains the code from the memory of the second computing device based on the first storage address in the second execution information, and processes the code. The processor scheduling engine in the second computing device directly invokes the idle second processor. After obtaining the address of the code in the second execution information, the second processor changes a value of a program counter (program counter, PC) of the second processor, so that the second processor obtains the code from an address to which the value of the PC points (that is, the first storage address). The second processor executes the code after obtaining the code.

The PC is a control register configured to store an address of an instruction in the second processor, and includes an address (location) of an instruction that is currently being executed. Each time an instruction is fetched, the storage address in the program counter is increased by one. Each time an instruction is fetched, the program counter points to a next instruction in a sequence. Because most instructions are executed sequentially, the process of changing the PC is usually simply increasing an "instruction byte count" to the PC. When a program is transferred, a final result of executing a transfer instruction is to change the value of the PC to a destination address to which the program is to be transferred. The second processor always fetches, decodes, and executes an instruction to which the PC points, thereby implementing the program transfer. When the transfer instruction is, for example, a jump instruction, an address of a subsequent instruction (that is, the content of the PC) needs to be fetched from an address field in an instruction register. In this case, a next instruction to be fetched from the internal memory is specified in the transfer instruction, rather than being fetched sequentially as usual. Therefore, a structure of the program counter should be a structure with two functions: information holding and counting. In this embodiment, the value of the PC may be changed sequentially, or may be changed through program transfer. This is not limited in this application.

In some other embodiments, when the second execution information includes the first storage address and the second storage address of the context, the second processor obtains the code from the second computing device based on the first storage address, obtains the context from the internal memory of the second computing device based on the second storage address, and executes the code by using the context, in other words, substitutes the context into the code and then executes the code. Specifically, the processor scheduling engine in the second computing device directly invokes the idle second processor. After obtaining the first storage address and the second storage address, the second processor changes the value of the PC, obtains the code from the memory based on the first storage address, and obtains the context from the internal memory based on the second storage address. The processor executes the code based on the context to generate result information.

507. The network interface card in the second computing device receives an execution result.

After executing the code, the second processor in the second computing device generates the execution result. The network interface card in the second computing device receives the execution result sent by the second processor in the second computing device.

508. The network interface card in the second computing device sends the execution result to the first computing device.

After receiving the result information, the network interface card in the second computing device sends the execution result to the first computing device.

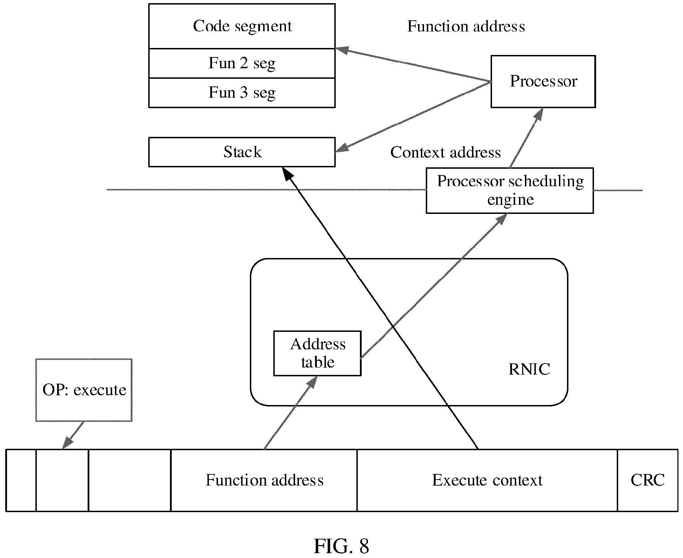

The foregoing step 502 to step 506 are implemented through cooperation of components in the second computing device. Refer to FIG. 8. FIG. 8 is a schematic diagram of an embodiment of processing data by the second computing device according to this application. The network interface card parses a data processing request. When a basic transmission header of the data processing request is Execute, the network interface card further obtains first execution information from an extension header of the data processing request.

If the first execution information does not include a context, the network interface card encapsulates a first storage address (function address) in the first execution information into second execution information, and sends the second execution information to the processor scheduling engine. The processor scheduling engine invokes the idle second processor to execute code corresponding to the first storage address.

If the first execution information includes the first storage address and a context, the network interface card stores the context into the internal memory of the second computing device, that is, into a stack (stack), obtains a second storage address (context address) of the context in the internal memory, and encapsulates the first storage address and the second storage address into second execution information. The network interface card sends the second execution information to the processor scheduling engine. The processor scheduling engine invokes the idle second processor to obtain the code based on the first storage address and obtain the context based on the second storage address. The processor executes the code based on the context.

In the related art, after receiving a data processing request, a network interface card directly stores the data request into an internal memory, an operating system schedules a processor to obtain the data processing request through polling manner and parse the data processing request, and when the data processing request carries a context, the second processor further needs to copy the context into the internal memory. It can be learned that this application has the following effects. The network interface card does not need to write the entire data processing request into the internal memory, so that a latency of parsing the data processing request can be reduced. When the network interface card determines that there is a task to be executed, the network interface card indicates the processor scheduling engine to actively invoke the second processor. This does not require the operating system to schedule the second processor to determine, through polling, an interrupt, or in other manners, whether a to-be-executed task is received, so that overheads such as bandwidth of the second processor can be reduced, and efficiency of processing the computing task can be improved. When the context exists, the network interface card directly stores the context into a location corresponding to the second storage address, and the second processor only needs to directly obtain the context from the internal memory based on the second storage address. This does not require the second processor to parse the data processing request and copy the context into the location corresponding to the second storage address, so that overheads such as bandwidth of the second processor can be reduced, and execution efficiency of the second processor can be improved. The process from processing of the data processing request to task execution does not require the OS to invoke the second processor, so that execution efficiency of processing the computing task can be improved.

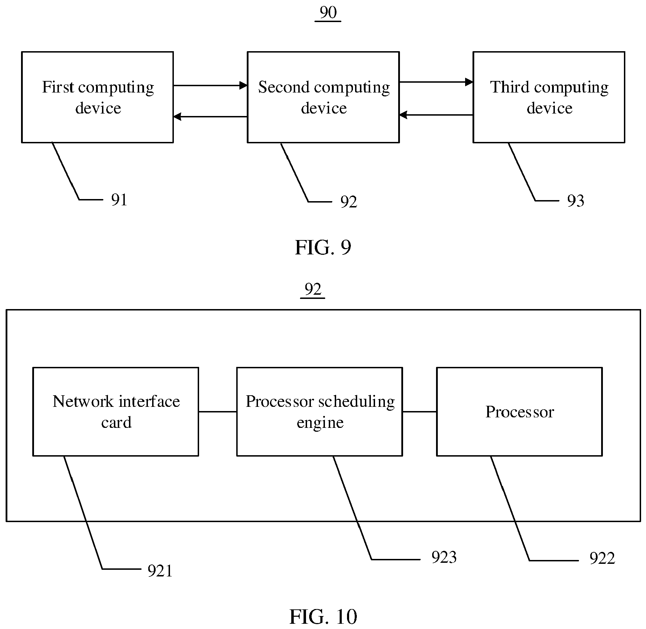

The foregoing describes an embodiment in which the computing task is processed by the second processor in the host. In some other embodiments, the second computing device is a data processing unit (data processing unit, DPU), and the computing task is processed by the second processor in the data processing unit. Refer to FIG. 9. FIG. 9 is a schematic structural diagram of another embodiment of a data processing system according to this application.

A system 90 includes a first computing device 91, a second computing device 92, and a third computing device 93. The first computing device 91 in FIG. 9 serves as a source device, and is configured to send a data processing request. The second computing device 92 is a remote device, and is configured to execute a task based on the request. The second computing device 92 is a DPU. The third computing device 93 is a device storing a computing task. Specifically, the third computing device 93 is a host including a central processing unit and an internal memory.

The first computing device 91 communicates with the second computing device 92 via a network supporting an RDMA protocol. Information transmission may be performed between the second computing device 92 and the third computing device 93 via a system bus.

As shown in FIG. 10, FIG. 10 is a schematic structural diagram of an embodiment of the second computing device in FIG. 9. In this embodiment, the second computing device 92 includes a network interface card 921, a processor 922, and a processor scheduling engine 923. The network interface card 921 in this embodiment is the same as the network interface card 121 in FIG. 4, and therefore details are not described herein again. The network interface card 921 is connected to the processor scheduling engine 923, and the processor scheduling engine 923 is connected to the processor 922. The processor scheduling engine may be a packet order enforcer (packet order enforcer, POE). In this embodiment, the processor 922 may be a data processor.

The network interface card 921 is configured to receive a data processing request from the first computing device 91, and parse the data processing request. After parsing the data processing request to obtain corresponding task information, the network interface card 921 sends the task information to the processor scheduling engine 923. The processor scheduling engine 923 is configured to schedule, after receiving the task information from the network interface card 921, the processor 922 to process a computing task to execute a task corresponding to the task information. Therefore, this does not require the operating system to schedule the processor 922 to parse the data processing request, and the processor 922 may be directly scheduled to execute a specific task, thereby improving task execution efficiency.

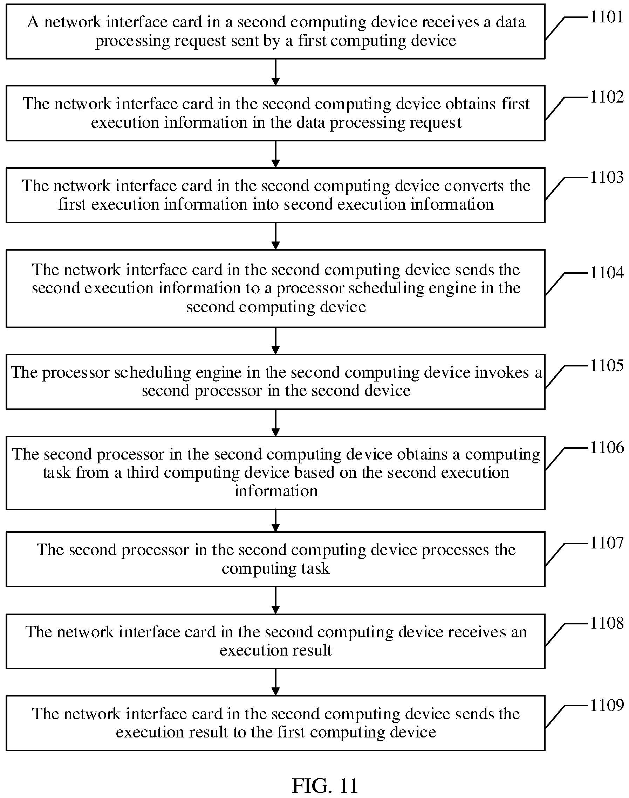

Based on the second computing device 92, this application provides the following embodiment of a data processing method. As shown in FIG. 11, FIG. 11 is a schematic flowchart of a second embodiment of a data processing method according to this application. This embodiment includes the following steps.

1101. A network interface card in a second computing device receives a data processing request sent by a first computing device.

This step is similar to step 501, and therefore details are not described herein again.

1102. The network interface card in the second computing device obtains the first execution information in the data processing request.

This step is similar to step 502, and therefore details are not described herein again.

1103. The network interface card in the second computing device converts the first execution information into second execution information.

This step is similar to step 503, and therefore details are not described herein again.

1104. The network interface card in the second computing device sends the second execution information to the processor scheduling engine in the second computing device.

This step is similar to step 504, and therefore details are not described herein again.

1105. The processor scheduling engine in the second computing device invokes the second processor in the second device.

1106. The second processor in the second computing device obtains the computing task from a third computing device based on the second execution information.

The computing task is stored in a memory of a host (that is, the third computing device). Therefore, before processing the computing task, the processor in the second computing device needs to obtain the computing task from the third device based on the first storage address in the second execution message.

1107. The second processor in the second computing device processes the computing task.

When the second execution information includes the first storage address and does not include the context, the processor in the second computing device directly processes the computing task.

When the second execution information includes the first storage address, the context, and the second storage address, the processor in the second computing device processes the computing task based on the context.

1108. The network interface card in the second computing device receives an execution result.

After executing the code, the processor in the second computing device generates the execution result. The network interface card in the second computing device receives the execution result sent by the processor in the second computing device.

1109. The network interface card in the second computing device sends the execution result to the first computing device.

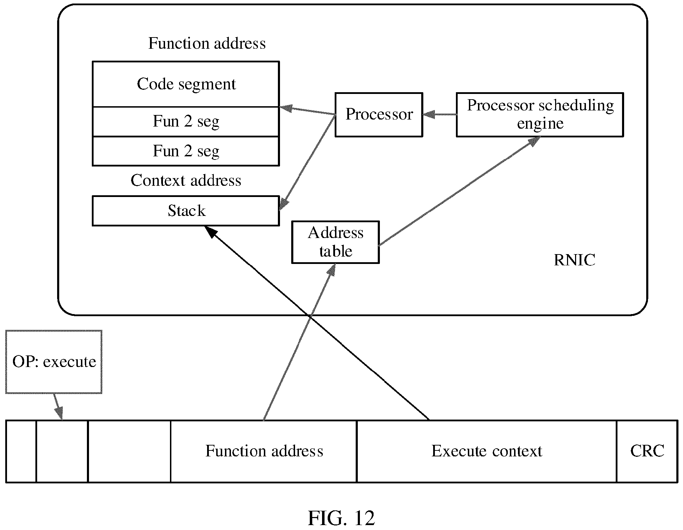

The foregoing step 1102 to step 1107 are implemented through cooperation of components in the second computing device. Refer to FIG. 12. FIG. 12 is a schematic diagram of another embodiment of processing data by the second computing device according to this application. The network interface card parses a data processing request. When a basic transmission header of the data processing request is Execute, the network interface card further obtains first execution information from an extension header of the data processing request.

If the first execution information does not include a context, the network interface card encapsulates a first storage address in the first execution information into second execution information, and sends the second execution information to the processor scheduling engine. The processor scheduling engine invokes the idle processor to execute code corresponding to the first storage address.

If the first execution information includes the first storage address and a context, the network interface card stores the context into the internal memory of the second computing device through DMA, obtains a second storage address of the context in the internal memory, and encapsulates the first storage address and the second storage address into second execution information. The network interface card sends the second execution information to the processor scheduling engine. The processor scheduling engine invokes the idle second processor to obtain the code from a memory of a third computing device based on the first storage address and obtain the context based on the second storage address. The processor executes the code based on the context.

It can be learned that, after receiving the data processing request, the network interface card directly parses the data processing request to obtain the first execution information in the data processing request, converts the first execution information into the second execution information, and sends the second execution information to the processor scheduling engine. The processor scheduling engine directly invokes the second processor to process the to-be-processed data. This does not require sending the data processing request to an internal memory of the computing device and then using an OS to invoke the second processor to parse the data processing request, thereby avoiding the use of the OS to invoke the processor and improving execution efficiency.

In conclusion, the foregoing embodiments are merely intended for describing the technical solutions of the present invention, but not for limiting the present invention. Although the present invention is described in detail with reference to the foregoing embodiments, a person of ordinary skilled in the art should understand that modifications may still be made to the technical solutions described in the foregoing embodiments or equivalent replacements may be made to some technical features, and such modifications or replacements do not cause the essence of the corresponding technical solutions to depart from the spirit and scope of technical solutions in embodiments of the present invention.

## Claims

1. A data processing method, executed by a computing device, wherein the computing device comprises a network interface card, a processor, and a processor scheduling engine, and the method comprises:
receiving, by the network interface card, a data processing request, wherein the data processing request comprises first execution information of to-be-processed data;
obtaining, by the network interface card, the first execution information from the data processing request;
converting, by the network interface card, the first execution information into second execution information;
sending, by the network interface card, the second execution information to the processor scheduling engine;
invoking, by the processor scheduling engine, the processor to process the second execution information; and
processing, by the processor, the to-be-processed data based on the second execution information.

2. The method according to claim 1, wherein the to-be-processed data is to-be-executed code, and the first execution information comprises a first storage address of the code; and
the processing, by the processor, the to-be-processed data based on the second execution information comprises:
obtaining, by the processor, the code based on the first storage address in the second execution information; and
executing, by the processor, the code.

3. The method according to claim 1, wherein the to-be-processed data is to-be-executed code, and the first execution information comprises a first storage address of the code and a context required for executing the code;
after obtaining the first execution information from the data processing request, the network interface card stores the context into an internal memory of the computing device;
the second execution information comprises the first storage address and a second storage address at which the context is stored; and
the processing, by the processor, the to-be-processed data based on the second execution information comprises:
obtaining, by the processor, the first storage address and the second storage address from the second execution information, obtaining the code based on the first storage address, obtaining the context based on the second storage address, and executing the code based on the context.

4. The method according to any one of claims 1 to 3, wherein the data processing request is carried in an execution command in a remote direct memory access RDMA protocol.

5. The method according to claim 4, wherein the execution command is a command defined in a custom field of a transport layer in the RDMA protocol.

6. The method according to any one of claims 1 to 5, wherein the computing device comprises a host connected to the network interface card, and the host comprises the processor and the processor scheduling engine.

7. The method according to claim 2 or 3, wherein the computing device is a data processing unit DPU, the computing device is connected to another computing device, the to-be-processed data is stored in the another computing device, and the obtaining, by the processor, the code based on the first storage address comprises:
obtaining, by the processor, the code from the another computing device based on the first storage address.

8. A network interface card, comprising a first processor and a storage device, wherein the storage device stores program instructions, and the first processor runs the program instructions to execute:
receiving a data processing request, wherein the data processing request comprises first execution information of to-be-processed data;
obtaining the first execution information from the data processing request; and
converting the first execution information into second execution information, and sending the second execution information to a processor scheduling engine, wherein the second execution information is used for indicating the processor scheduling engine to schedule a second processor, so that the second processor processes the to-be-processed data based on the second execution information.

9. The network interface card according to claim 8, wherein the data processing request is carried in an execution command in a remote direct memory access RDMA protocol, and the execution command is used for indicating the network interface card to process the data processing request.

10. The network interface card according to claim 8, wherein the execution command is a command defined in a custom field of a transport layer in the RDMA protocol.

11. A computing device, comprising the network interface card according to any one of claims 8 to 10, a second processor, and a processor scheduling engine, wherein
the processor scheduling engine is configured to invoke the second processor to process the second execution information; and
the second processor is configured to process the to-be-processed data based on the second execution information.

12. The computing device according to claim 11, wherein the to-be-processed data is to-be-executed code, and the first execution information comprises a first storage address of the code; and
the second processor is specifically configured to obtain the code based on the first storage address in the second execution information, and execute the code.

13. The computing device according to claim 12, wherein the to-be-processed data is to-be-executed code, and the first execution information comprises a first storage address of the code and a context required for executing the code;
after obtaining the first execution information from the data processing request, the network interface card is further configured to store the context into an internal memory of the computing device;
the second execution information comprises the first storage address and a second storage address at which the context is stored; and
the second processor is specifically configured to: obtain the first storage address and the second storage address from the second execution information, obtain the code based on the first storage address, obtain the context based on the second storage address, and execute the code based on the context.

14. The computing device according to claim 11 or 12, wherein the computing device comprises a host connected to the network interface card, and the host comprises the second processor and the processor scheduling engine.

15. The computing device according to claim 13, wherein the computing device is a data processor DPU, the computing device is connected to another computing device, and the to-be-processed data is stored in the another computing device.
